# EUROPÄISCHE PATENTSCHRIFT

(11) **EP 2 361 749 B1**
(45) Veröffentlichungstag und Bekanntmachung des Hinweises auf die Patenterteilung: **12.04.2017**
(21) Anmeldenummer: 11001068.3
(22) Anmeldetag: 10.02.2011
(51) Int. Cl.: B29C 65/18, B32B 27/08, B32B 27/32, B32B 27/36, B65D 75/00, B65D 81/34, B65D 77/20

(54) **Verpackung mit delaminierbarem Deckel**
Packaging with delaminatable cover
Emballage doté d'un couvercle indélaminable

(30) Priorität: 10.02.2010 DE 102010007663
(43) Veröffentlichungstag der Anmeldung: 31.08.2011
(73) Patentinhaber: Wipak Walsrode GmbH & Co. KG, 29656 Walsrode (DE)
(72) Erfinder: Richards, Jaquie, 27374 Visselhövede (DE); Wrede, Sascha, 29693 Hodenhagen (DE); Sperlich, Bernd, Dr., 29664 Walsrode (DE); Cassel, Antoine, 59960 Neuville-en-Ferrain (FR); Castillo, Antonio, 59250 Halluin (FR)
(74) Vertreter: Kutzenberger, Helga

(56) Entgegenhaltungen:
- EP-A1- 0 262 652
- DE-A1- 3 613 155
- DE-A1- 19 859 334
- DE-U1-202008 005 665
- US-A- 4 937 139
- US-A1- 2004 151 932

## Beschreibung

Die vorliegende Erfindung betrifft eine ein gut kontrollierbares Öffnungsverhalten aufweisende Verpackung aus einem Behälter basierend auf einem Film aus wenigstens einem thermoplastischen Polymeren, dessen Öffnung mit einem Deckel aus einer transparenten Mehrschichtfolie versiegelt ist, die eine Siegelschicht (a) basierend auf wenigstens einem heißsiegelfähigen thermoplastischen Polymeren mit einer Schichtdicke von höchstens 12 µm und eine an die Siegelschicht (a) angrenzende Schicht (b) basierend auf wenigstens einem thermoplastischen Polymeren, und gegebenenfalls weitere Schichten umfasst, wobei die Verbundhaftung zwischen der Siegelschicht (a) und der Schicht (b) um wenigstens 30% geringer ist als die Siegelfestigkeit zwischen dem Behälter und dem Deckel, so dass die Mehrschichtfolie zwischen der Siegelschicht (a) und der Schicht (b) so peelbar verbunden ist, dass beim ersten Öffnen der Verpackung im Siegelnahtbereich ein Stück der Siegelschicht (a) auf dem Behälter verbleibt.

In der Lebensmittelindustrie werden Verpackungsgüter wie Lebensmittel vielfach in Kunststoffverpackungen aus einem Behälter und einem Deckel dargeboten, die es ermöglichen, dass das Verpackungsgut für den Käufer durch die Verpackung und insbesondere durch den Deckel klar und sichtbar zu begutachten ist. Dabei ist es wünschenswert, dass die Verpackungen mit geringer und gleichmäßiger Krafteinwirkung kontrollierbar zu öffnen sind.

Aus dem Stand der Technik sind Verpackungen bekannt, deren Deckel aus einer ein Siegelschichtmaterial aufweisenden Mehrschichtfolie besteht, welcher durch Heißsiegelung auf den Behälter aufgebracht wird. Das Öffnen solcher Verpackungen erfolgt üblicherweise durch Öffnung der so entstandenen Heißsiegelnaht. Um das Öffnen zu erleichtern, kann das Siegelschichtmaterial einer Deckelfolie so zusammengesetzt sein, dass der Deckel mit dem Behälter peelbar verbunden werden kann. Dabei ist es jedoch nachteilig, dass das peelbare Siegelschichtmaterial oft zu einer unerwünschten Trübung des Deckels führt und zudem wegen der Peelbarkeit eine verminderte Verbundfestigkeit zwischen den beiden Verpackungselementen vorliegt.

In EP 1 749 655 B1 wird versucht, dieses Problem durch Bereitstellung einer Mehrschichtfolie zu lösen, in der nicht das Siegelschichtmaterial peelbar ist, sondern die an die Siegelschicht angrenzende Schicht in ihrer Kohäsion geschwächt wird. Dies wird dadurch erreicht, dass diese Schicht aus einem Polymer-Blend aus zwei unverträglichen Polymer-Komponenten besteht. Wenn eine so aufgebaute Mehrschichtfolie als Deckel einer Verpackung gegen ein zweites Verpackungselement gesiegelt wird, so verbleiben die Siegelschicht und ein Teilschicht der angrenzenden Schicht des Deckels beim Öffnen der Verpackung im Bereich der Siegelnaht auf dem zweiten Verpackungselement, da die angrenzende Schicht in der Schicht längsflächig durchreißt (Kohäsions-Peel). Dies führt nicht nur zu keiner sauberen Trennung zwischen Deckel und Behälter, sondern kann auch zu einem ungewollten Weiterreißen bzw. Abreißen des Deckels im oder nach dem Siegelnahtbereich führen. Zwar wird im Vergleich mit Deckeln aus Mehrschichtfolien, die ein peelbares Siegelschichtmaterial aufweisen, eine verbesserte Verbundfestigkeit zwischen den beiden Verpackungselementen, aber wegen der Unverträglichtkeit der Polymer-Komponenten des Polymer-Blends keine Verbesserung der Trübung des Deckels erreicht.

Es besteht daher ein Bedarf an Verpackungen, die sich durch ein gleichmäßig gutes und gut kontrollierbares Öffnen auszeichnen und die gleichzeitig eine sehr gute Kontrolle des darin verpackten Verpackungsguts für den potentiellen Käufer insbesondere durch den Deckel ermöglichen.

Aufgabe der vorliegenden Erfindung war es daher, Verpackungen zur Verfügung zu stellen, die sich durch ein gut kontrollierbares, weitgehend zerstörungsfreies und gleichmäßiges Öffnen gegenüber bekannten Verpackungen auszeichnen und gleichzeitig sehr gute optische Eigenschaften wie Transparenz im Hinblick auf eine unerwünschte Trübung, zumindest des Deckels aufweisen.

Diese Aufgabe wird erfindungsgemäß durch die Bereitstellung einer ein gut kontrollierbares Öffnungsverhalten aufweisenden Verpackung aus einem Behälter basierend auf einem einschichtigen oder mehrschichtigen Film aus wenigstens einem thermoplastischen Polymeren, dessen Öffnung mit einem Deckel aus einer transparenten Mehrschichtfolie versiegelt ist, die
eine Siegelschicht (a) basierend auf wenigstens einem heißsiegelfähigen, thermoplastischen Olefin- Homo- und/oder Copolymeren mit einer Schichtdicke von höchstens 12 µm, eine an die Siegelschicht (a) angrenzende Schicht (b) aus wenigstens einem thermoplastischen Copolymeren aus Ethylen und/oder Propylen und wenigstens einem α-Olefin mit mindestens 4 Kohlenstoffatomen, wobei die Schicht (b) auf einem von den thermoplastischen Polymeren der Siegelschicht (a) verschiedenen, thermoplastischen Polymeren basiert,
und gegebenenfalls weitere Schichten umfasst, wobei die gegebenenfalls vorhandene Siegelschicht (s) auf dem - oder denselben Polymeren wie die Siegelschicht (a) beruht und der einschichtige Film des Behälters aus denselben thermoplastischen Olefin- Homo- und/oder Copolymeren hergestellt ist, aus denen die Siegelschicht (a) hergestellt ist,
oder alternativ
die Öffnung des Behälters mit einem Deckel aus einer transparenten Mehrschichtfolie versiegelt ist, die
eine Siegelschicht (a) basierend auf wenigstens einem heißsiegelfähigen, thermoplastischen, amorphen Homo- oder Copolyester mit einer Schichtdicke von höchstens 12 µm, eine an die Siegelschicht (a) angrenzende Schicht (b) aus wenigstens einem Ethylen-Copolymeren ausgewählt aus der Gruppe umfassend Ethylen-Vinylacetat-Copolymere, Ethylen-C₁₋₄-Alkyl(meth)acrylatCopolymere und Ethylen- (Meth)acrylsäure-Copolymere, wobei die Schicht (b) auf einem von den thermoplastischen Polymeren der Siegelschicht (a) verschiedenen, thermoplastischen Polymeren basiert,
und gegebenenfalls weitere Schichten umfasst,
wobei die gegebenenfalls vorhandene Siegelschicht (s) auf dem - oder denselben Polymeren wie die Siegelschicht (a) beruht und der einschichtige Film des Behälters aus einem thermoplastischen Homo- und/oder Copolyester hergestellt ist,
wobei die Verbundhaftung zwischen der Siegelschicht (a) und der Schicht (b) jeweils um wenigstens 30% geringer ist als die Siegelfestigkeit zwischen dem Behälter und dem Deckel, so dass die Mehrschichtfolie zwischen der Siegelschicht (a) und der Schicht (b) so peelbar verbunden ist, dass beim ersten Öffnen der Verpackung im Siegelnahtbereich nur ein Stück der Siegelschicht (a) in der Breite der Siegelnaht auf dem Behälter verbleibt und keine weitere Delaminierung zwischen den Schichten (a) und (b) erfolgt,
gelöst.

Dadurch, dass die Verbundhaftung zwischen der Siegelschicht (a) und der angrenzenden Schicht (b) eine Verbundhaftung aufweist, die um wenigstens 30 % geringer ist als die Siegelfestigkeit zwischen dem Behälter und dem Deckel, kommt es beim ersten Öffnen der Verpackung im Siegelnahtbereich dazu, dass ein Stück der Siegelschicht (a) in der Breite der Siegelnaht durch Durchreißen und Delaminieren von der Schicht (b) auf den Behälter verbleibt und damit die Verpackung gut kontrollierbar und praktisch ohne weitere Zerstörung insbesondere des Deckels geöffnet werden kann. Darüber hinaus erfolgt beim ersten Öffnen der Verpackung keine weitere Delaminierung zwischen der Schicht (b) und (a) außer im Siegelnahtbereich, so dass die Verpackung nicht durch eine von der Schicht (b) delaminierte auf dem Behälter verbleibende Siegelschicht (a) verschlossen bleibt. Erfindungsgemäß verbleibt beim ersten Öffnen der Verpackung aufgrund der weit niedrigeren Verbundhaftung zwischen der Siegelschicht (a) und der Schicht (b) im Siegelnahtbereich nur ein Stück der Siegelschicht (a) in der Breite der Siegelnaht durch Durchreißen der Siegelschicht (a) und Delaminieren von der Schicht (b) auf dem Behälter.

Unter dem Begriff "peelbar" bzw. "Peelbarkeit" ist im Sinne der vorliegenden Erfindung zu verstehen, dass die Siegelschicht (a) und die Schicht (b) der erfindungsgemäßen Verpackung delaminierbar miteinander verbunden sind und zerstörungsfrei voneinander getrennt werden können. Ein Maß für die Delaminierbarkeit und damit für die Peelbarkeit ist die Verbundhaftung zwischen diesen beiden Schichten. Die Bestimmung der Verbundhaftung erfolgt gemäß der nachstehend beschriebenen Methode.

Diese Methode wird auch angewendet, um die Auswahl der Polymermaterialien für den Aufbau der Schicht (b) bzw. der damit verbundenen Siegelschicht (a) auf ausreichende Delaminierbarkeit an der Grenzfläche voneinander, d.h. Peelbarkeit der Siegelschicht (a) von der angrenzenden Schicht (b) zu überprüfen. Es versteht sich von selbst, dass auch die Verbundhaftung zwischen allen weiteren gegebenenfalls vorhandenen Schichten der als Deckelfolie zum Einsatz kommenden Mehrschichtfolie höher sein muss als die Verbundhaftung zwischen der Siegelschicht (a) und der Schicht (b).

In einer bevorzugten Ausführungsform der erfindungsgemäßen Verpackung beträgt die Verbundhaftung zwischen der Siegelschicht (a) und der Schicht (b) der erfindungsgemäß zum Einsatz kommenden Mehrschichtfolie mindestens 2,5 N/15 mm, vorzugsweise mindestens 3,5 N/15 mm, besonders bevorzugt mindestens 4,5 N/15 mm. Dabei ist zu beachten, dass diese Verbundhaftung keinesfalls die nachstehend angebenen Höchstwerte für die Siegelfestigkeit überschreiten darf, sondern immer einen um mindestens 30% geringeren Wert aufweisen muss.

Die Siegelfestigkeit zwischen den beiden Verpackungselementen, Behälter und Deckel, beträgt vorzugsweise höchstens 35 N/15 mm, besonders bevorzugt ≤ 30 N/15 mm.

Die Bestimmung der Siegelfestigkeit erfolgt gemäß der nachstehend beschriebenen Methode. Diese Methode kann auch dazu angewendet werden, um die Auswahl der Polymermaterialien für den Aufbau der Siegelschicht (a) und des Films des Behälters auf ausreichende Siegelfestigkeit zu überprüfen.

Die erfindungsgemäß zum Einsatz kommende Mehrschichtfolie ist transparent, d.h. die Siegelschicht (a) und die Schicht (b) und alle gegebenenfalls weiteren vorhandenen Schichten sind transparent. Die Bestimmung der Transparenz jeder einzelnen Schicht der erfindungsgemäß zum Einsatz kommenden Mehrschichtfolie erfolgt gemäß der nachstehend beschriebenen Methode. Wenn notwendig kann die Mehrschichtfolie aber z.B. für Informationzwecke bedruckt sein.

Gemäß einer der alternativen Ausführungsform der erfindungsgemäß zum Einsatz kommenden Mehrschichtfolie basiert
die Siegelschicht (a) auf wenigstens einem Olefin-Homo und/oder Copolymeren, vorzugsweise auf wenigstens einem Propylen Homo- und/oder Copolymeren, besonders bevorzugt auf wenigstens einem Propylen-Copolymeren, und
die Schicht (b) auf wenigstens einem Copolymeren aus Ethylen und/oder Propylen, vorzugsweise Ethylen, und wenigstens einem α-Olefin mit mindestens 4 Kohlenstoffatomen, wie nachstehend ausgeführt.

Zur Herstellung der transparenten Schicht (a) der erfindungsgemäß zum Einsatz kommenden Mehrschichtfolie eignet sich wenigstens ein thermoplastisches Olefin-Homo- und Copolymer.

Zur Herstellung der transparenten Siegelschicht (a) der erfindungsgemäß zum Einsatz kommenden Mehrschichtfolie können vorzugsweise dieselbe Art von Olefin-Homo- und Copolymere verwendet werden, wie nachstehend - urprünglich als geeignet - zur Herstellung der Schicht (b) offenbart wurden. Werden zur Herstellung der Siegelschicht (a) Olefin-Copolymere eingesetzt, so beträgt der α-Olefin-Anteil in diesen Olefin-Copolymeren jedoch vorzugsweise höchstens 15 Gew.-%, besonders bevorzugt höchstens 10 Gew.-%, jeweils bezogen auf das Gesamtgewicht des Olefin-Copolymeren.

Zur Herstellung der Schicht (b) bzw. der Schicht (a) der erfindungsgemäß zum Einsatz kommenden Mehrschichtfolie geeignete Olefin-Homo- und Copolymere sind vorzugsweise thermoplastische Olefin-Homo-oder Copolymere von α,β-ungesättigten Olefinen mit 2-10, d.h. 2, 3, 4, 5, 6, 7, 8, 9 oder 10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB) und Isobutylen-Homopolymere (Polyisobutylene, PI) oder Mischungen aus wenigstens zwei der genannten Polymere. Mit "LDPE" werden Polyethylene mit niedriger Dichte bezeichnet, die eine Dichte im Bereich von 0,86-0,93 g/cm³ aufweisen und sich durch einen hohen Verzweigungsgrad der Moleküle auszeichnen. Mit "HDPE" werden Polyethylene hoher Dichte bezeichnet, welche nur eine geringe Verzweigung der Molekülkette aufweisen, wobei die Dichte im Bereich zwischen 0,94 und 0,97 g/cm³ liegen kann.

Geeignete Olefin-Copolymere für die Schicht (a) bzw. erfindungsgemäß für die Schicht (b) sind nur Copolymere von Ethylen und/oder Propylen und wenigstens einem α-Olefin mit mindestens 4, vorzugsweise mit 4-10, besonders bevorzugt mit 4-8 Kohlenstoffatomen, ganz besonders bevorzugt Copolymere von Ethylen und/oder Propylen mit wenigstens einem α-Olefin ausgewählt aus der Gruppe umfassend Buten, Hexen und Octen. Für die Schicht (b) beträgt der α-Olefin-Anteil im Olefin-Copolymeren vorzugsweise höchstens 25 Gew.-%, besonders bevorzugt höchstens 15 Gew.-%, jeweils bezogen auf das Gesamtgewicht des Olefin-Copolymeren. Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Metallocen-Katalysatoren polymerisiert wurden und vorzugsweise eine Dichte im Bereich von 0,88 und 0,93 g/cm³ aufweisen.

Zur Herstellung der Schicht (b) bzw. der Schicht (a) können auch Mischungen aus Olefin-Copolymeren, für die Schicht (a) auch Mischungen von Olefin-Homopolymeren oder Mischungen von Olefin-Homo-Polymeren mit Olefin-Copolymeren eingesetzt werden, wobei jedoch eine Transparenz der Schicht (b) gewährleistet sein muss. Dabei ist der Anteil des Olefin-Copolymeren in der Mischung vorzugsweise höher als der Anteil des Olefin-Homopolymeren. Besonders bevorzugt ist eine Mischung aus mPE, LLDPE und/oder LDPE. Ganz besonders bevorzugt basiert die Schicht (b) auf einem mPE, einem LLDPE, jeweils bezogen auf das Gesamtgewicht der Schicht (b) bzw. (a), wobei die Summe der Gew.% immer 100 Gew.% ergeben muss.

Vorzugsweise beträgt der Olefin-Anteil in dem Olefin-Copolymeren der transparenten Schicht (b) der erfindungsgemäß zum Einsatz kommenden Mehrschichtfolie wenigstens 75%, vorzugsweise wenigstens 80%, besonders bevorzugt wenigstens 85%, jeweils bezogen auf das Gesamtgewicht des Olefin-Copolymeren.

Gemäß der zweiten alternativen Ausführungsform der erfindungsgemäß zum Einsatz kommenden Mehrschichtfolie basiert
die Siegelschicht (a) auf wenigstens einem amorphen Homo- oder Copolyester und
die Schicht (b) auf wenigstens einem Ethylen-Copolymeren ausgewählt aus der Gruppe umfassend Ethylen-Vinylacetat-Copolymere, Ethylen-C₁₋₄-Alkyl(meth)acrylat-Copolymere und Ethylen-(Meth)acrylsäure-Copolymere.

Zur Herstellung der transparenten Siegelschicht (a) dieser erfindungsgemäß der zweiten alternativen Ausführungsform zum Einsatz kommenden Mehrschichtfolie eignen sich thermoplastische Homo- und Copolyester.

Solche zur Herstellung dieser transparenten Siegelschicht (a) der erfindungsgemäß zum Einsatz kommenden Mehrschichtfolie geeignete Homo- und/oder Copolyester sind amorphe, thermoplastische aliphatische, teilaromatische und aromatische Homo- und Copolyester. Diese Homo- und Copolyester leiten sich von Polyolen, vorzugsweise von Diolen, wie z.B. Ethylenglycol oder 1,4-Butandiol und Dicarbonsäuren oder Dicarbonsäure-Derivaten wie Adipinsäure, Isophthalsäure und/oder Terephthalsäure ab. Erfindungsgemäß können zur Herstellung der Siegelschicht (a) als Homo- und/oder Copolyester auch Polycarbonate (PC) verwendet werden, solange eine Transparenz der Siegelschicht (a) gewährleistet ist. Als Homopolyester werden solche Polyester bezeichnet, die sich von einer Polyol-Komponente und einer Dicarbonsäure-Komponente ableiten. Geeignete Homopolyester sind vorzugsweise ausgewählt aus der Gruppe umfassend PET, PBA, und PBT. Mit "PET" wird Polyethylenterephthalat bezeichnet, welches aus Ethylenglykol und Terephthalsäure hergestellt werden kann. Mit "PBA" wird Polybutylenadipat bezeichnet, welches aus Butan-1,4-diol und Adipinsäure hergestellt werden kann. Mit "PBT" wird Polybutylenterephthalat bezeichnet, welches aus Butan-1,4-diol und Terephthalsäure hergestellt werden kann. Der vorzugsweise amorphe Zustand wird dabei durch das Präfix "A" gekennzeichnet. Ein besonders bevorzugter amorpher Homopolyester ist APET (amorphes PET). Als Copolyester werden solche Polyester bezeichnet, die neben einer Polyol-Komponente und einer Dicarbonsäure-Komponente noch wenigstens ein weiteres Co-Monomer, vorzugsweise eine weitere Polyol-Komponente, enthalten. Geeignete vorzugsweise amorphe Copolyester sind Copolyester aus einer aromatischen Dicarbonsäure wie Terephthalsäure, einem aliphatischen Glykol wie Ethylenglykol und wenigstens einem weiteren Monomer, vorzugsweise wenigstens einem weiteren Monomer ausgewählt aus der Gruppe umfassend vorzugsweise verzweigte aliphatische Polyole, aromatische Polyole und cycloaliphatische Polyole. Ein besonders bevorzugter amorpher Copolyester leitet sich von Ethylenglykol, Terephthalsäure und 1,4-Cyclohexandimethanol ab.

Vorzugsweise basiert die Siegelschicht (a) dieser erfindungsgemäß zum Einsatz kommenden Mehrschichtfolie auf wenigstens einem amorphen Homopolyester aus einer aromatischen Dicarbonsäure und einem aliphatischen Polyol, oder auf wenigstens einem amorphen Copolyester aus wenigstens einer aromatischen Dicarbonsäure, wenigstens einem aliphatischen und wenigstens einem cycloaliphatischen Polyol.

Ganz besonders bevorzugt basiert die Siegelschicht (a) der erfindungsgemäß zum Einsatz kommenden Mehrschichtfolie auf wenigstens einem amorphen Homopolyester aus einer aromatischen Dicarbonsäure und einem aliphatischen Diol, oder auf wenigstens einem amorphen Copolyester aus wenigstens einer aromatischen Dicarbonsäure, wenigstens einem aliphatischen und wenigstens einem cycloaliphatischen Diol.

Zur Herstellung der transparenten Schicht (b) der zweiten alternativen Ausführungsform erfindungsgemäß zum Einsatz kommenden Mehrschichtfolie geeignete Copolymere sind Copolymere aus wenigstens einem Olefin wie Ethylen und wenigstens einer Verbindung ausgewählt aus der Gruppe umfassend Vinylacetat, Alkyl(meth)acrylate, vorzugsweise C₁₋₄-Alkyl(meth)acrylate, besonders bevorzugt Methyl(meth)acrylat, Ethyl(meth)acrylat, n- und Isopropyl(meth)acrylat, n- und Iso-Butyl(meth)acrylat, tert.-Butyl(meth)acrylat, 2-Ethylhexyl(meth)acrylat, Cyclohexyl(meth)acrylat und Isobornyl(meth)acrylat, und (Meth)acrylsäure. Besonders bevorzugt ist als Comonomeres wenigstens ein α,β-ungesättigtes nichtolefinisches Monomer ausgewählt aus der Gruppe umfassend Vinylacetat, (Meth)acrylat und (Meth)acrylsäure.

Die Begriffe "(Meth)acrylat" und "(Meth)acrylsäure" umfassen im Sinne der vorliegenden Erfindung sowohl Alkylmethacrylate und Methacrylsäure als auch Alkylacrylate und Acrylsäure.

Vorzugsweise basiert die Schicht (b) der erfindungsgemäß zum Einsatz kommenden Mehrschichtfolie auf einem von dem thermoplastischen Polymeren der Siegelschicht (a) verschiedenen thermoplastischen Polymeren.

Die Schicht (b) der erfindungsgemäß zum Einsatz kommenden Mehrschichtfolie weist vorzugsweise eine Schichtdicke von wenigstens 3 µm, besonders bevorzugt von ≥ 6 µm, ganz besonders bevorzugt von 7 bis 14 µm auf.

In einer bevorzugten Ausführungsform weist die transparente Siegelschicht (a) der erfindungsgemäß zum Einsatz kommenden Mehrschichtfolien eine Antifog-Ausrüstung auf. Vorzugsweise enthält die Siegelschicht (a) dabei wenigstens ein Antifog-Additiv oder die Siegelschicht (a) weist zumindest einseitig eine Beschichtung basierend auf wenigstens einem Antifog-Additiv auf. Als Antifog-Additiv wird vorzugsweise wenigstens ein Additiv ausgewählt aus der Gruppe umfassend alkoxylierte Amine, alkoxylierte Amide und Polyol-Fettsäureester, vorzugsweise Glycerolfettsäureester, sowie deren entsprechende Salze, eingesetzt. Wird die Siegelschicht (a) zumindest einseitig mit wenigstens einem Antifog-Additiv beschichtet, so kann die Siegelschicht (a) der erfindungsgemäß zum Einsatz kommenden Mehrschichtfolie vor dieser Beschichtung gegebenfalls Corona-(vor)behandelt werden. Basiert die Siegelschicht (a) auf wenigstens einem Olefin-Homo- und/oder Copolymeren, so wird sie vor einer zumindest einseitigen Beschichtung mit wenigstens einem Antifog-Additiv vorzugsweise Corona-(vor)behandelt. Basiert die Siegelschicht (a) auf wenigstens einem Homo- und/oder Copolyester, so ist es nicht immer notwendig, vor einer zumindest einseitigen Beschichtung mit wenigstens einem Antifog-Additiv eine Corona-(Vor)behandlung durchzuführen. Vorzugsweise kann die Siegelschicht (a) zumindest einseitig eine Beschichtung basierend auf wenigstens einem Antifog-Additiv aufweisen, wenn die Siegelschicht (a) auf wenigstens einem Homo- und/oder Copolyester basiert. Basiert die Siegelschicht (a) auf wenigstens einem Olefin-Homo- und/oder Copolymeren, so kann die Siegelschicht (a) vorzugsweise wenigstens ein Antifog-Additiv als Antifog-Ausrüstung enthalten.

Vorzugsweise weist die Siegelschicht (a) der erfindungsgemäß zum Einsatz kommenden Mehrschichtfolie eine Schichtdicke von höchstens 12 µm, besonders bevorzugt von 2 bis 10 µm, ganz besonders bevorzugt von 3 bis 8 µm auf.

Gegebenenfalls können die Siegelschicht (a) und die transparente Schicht (b) eine identische Schichtdicke aufweisen. Vorzugsweise weist jedoch die Siegelschicht (a) eine Schichtdicke auf, die um wenigstens 30% geringer ist als die Schichtdicke der Schicht (b).

Der Behälter der erfindungsgemäßen Verpackung ist vorzugsweise eine Mulde oder eine Schale geformt aus einem ein- oder mehrschichtigen, vorzugsweise einschichtigen Film aus einem thermoplastischen Polymeren, der gegebenenfalls eine Siegelschicht (s) basierend auf einem heißsiegelfähigen thermoplastischen Polymeren aufweist. Sowohl der ein- oder mehrschichtige Film als auch die Siegelschicht (s) können gegebenenfalls transparent sein, müssen es aber nicht.

Zur Herstellung der ggf. vorhandenen Siegelschicht (s) des erfindungsgemäß zum Einsatz kommenden Behälters eignen sich dieselben, heißsiegelfähigen thermoplastischen Polymere, die jeweils zur Herstellung der Siegelschicht (a) der erfindungsgemäß als Deckel zum Einsatz kommenden Mehrschichtfolie eingesetzt werden können. Vorzugsweise basiert die Siegelschicht (s) des erfindungsgemäß zum Einsatz kommenden Behälters auf dem- oder denselben Polymeren wie die Siegelschicht (a) der als Deckel zum Einsatz kommenden Mehrschichtfolie. In einer besonders bevorzugten Ausführungsform basieren sowohl die transparente Siegelschicht (a) als auch die Siegelschicht (s) auf wenigstens einem amorphen Homo- und/oder Copolyester. In der alternativen Ausführungsform basieren sowohl die transparente Siegelschicht (a) als auch die Siegelschicht (s) auf wenigstens einem Olefin Homo- und/oder Copolymeren.

Vorzugsweise weist die Siegelschicht (s) des erfindungsgemäß zum Einsatz kommenden Behälters eine Schichtdicke von ≤ 20 µm, besonders bevorzugt von 1 bis 12 µm, ganz besonders bevorzugt von 2 bis 11 µm auf.

Der Behälter der erfindungsgemäßen Verpackung ist vorzugsweise durch Thermoverformung, besonders bevorzugt durch Tiefziehen, aus einem Film geformt worden. Vorzugsweise weist der erfindungsgemäß zum Einsatz kommende Behälter einen umlaufenden Rand auf, der die Größe der Öffnung des Behälters definiert, die mit dem Deckel versiegelt wird.

Zur Herstellung des vorzugsweise einschichtigen Films des erfindungsgemäß zum Einsatz kommenden Behälters eignet sich ein thermoplastisches Polymer, vorzugsweise ein thermoplastisches Polymer ausgewählt aus der Gruppe umfassend Homo- und Copolyester oder Olefin-Homo- und Copolymere.

Dabei können zur Herstellung des vorzugsweise einschichtigen Films des erfindungsgemäß zum Einsatz kommenden Behälters dieselben thermoplastischen Homo- und/oder Copolyester und Olefin-Homo- und/oder Copolymere eingetzt werden, die sich auch jeweils zur Herstellung der Siegelschicht (a) eignen. Basiert der vorzugsweise einschichtige Film auf einem Homo- oder Copolyester, so müssen diese Homo- und/oder Copolyester jedoch nicht amorph sein, sondern können auch kristallin oder teilkristallin sein. Besonders bevorzugte Homo- oder Copolyester zur Herstellung des vorzugsweise einschichtigen Films sind ausgewählt aus der Gruppe umfassend CPET (kristallines PET) und APET.

Vorzugsweise weist der vorzugsweise einschichtige Film des erfindungsgemäß zum Einsatz kommenden Behälters eine Schichtdicke von 200 bis 1200 µm, besonders bevorzugt von 300 bis 900 µm, auf.

In einer alternativen Ausführungsform der erfindungsgemäßen Verpackung besteht der Deckel aus einer transparenten Mehrschichtfolie umfassend
eine Siegelschicht (a) basierend auf wenigstens einem Olefin-Homo und/oder Copolymeren, vorzugsweise basierend auf wenigstens einem Propylen Homo- und/oder Copolymeren, besonders bevorzugt basierend auf wenigstens einem Propylen-Copolymeren, und
eine Schicht (b) basierend auf wenigstens einem Copolymeren aus Ethylen und/oder Propylen, vorzugsweise Ethylen, und wenigstens einem α-Olefin mit mindestens 4 Kohlenstoffatomen, und
der Behälter besteht aus einem vorzugsweise einschichtigen Film aus einem Olefin-Homo- oder Copolymeren, vorzugsweise aus einem Olefin-Homopolymeren, besonders bevorzugt aus einem Propylen-Homopolymeren, wobei der Film ggf. eine Siegelschicht (s) basierend auf einem
heißsiegelfähigen thermoplastischen Olefin-Homo- und/oder Copolymeren aufweisen kann.

In der anderen alternativen Ausführungsform der erfindungsgemäßen Verpackung besteht der Deckel aus einer transparenten Mehrschichtfolie umfassend
eine Siegelschicht (a) basierend auf wenigstens einem amorphen Homo- oder Copolyester und
eine Schicht (b) basierend auf wenigstens einem Ethylen-Copolymeren ausgewählt aus der Gruppe umfassend Ethylen-Vinylacetat-Copolymere, Ethylen-C₁₋₄-Alkyl(meth)acrylat-Copolymere und Ethylen-(Meth)acrylsäure-Copolymere, und
der Behälter besteht aus einem vorzugsweise einschichtigen Film aus einem thermoplastischen Polymer ausgewählt aus der Gruppe bestehend aus Homo- und Copolyester und Polyvinylchloride, wobei der Film ggf. eine Siegelschicht (s) basierend auf einem heißsiegelfähigen thermoplastischen Homo- und/oder Copolyester aufweisen kann.

In einer bevorzugten Ausführungsform weist die erfindungsgemäß als Deckelfolie zum Einsatz kommende Mehrschichtfolie eine transparente Schicht (c) als Barriereschicht, vorzugsweise als eine Gasbarriereschicht auf, welche ggf. über eine transparente Haftvermittlerschicht (d) jeweils mit der angrenzenden Schicht verbunden ist. Besonders bevorzugt ist die Schicht (c) eine Sauerstoffbarriereschicht und/oder eine Wasserdampfbarriereschicht.

Vorzugsweise basiert die Schicht (c) der erfindungsgemäß zum Einsatz kommenden Mehrschichtfolie auf wenigstens einem thermoplastischen Polymeren ausgewählt aus der Gruppe umfassend Ethylen-Vinylalkohol-Copolymere (EVOH), zumindest teilverseifte Polyvinylacetate, Polyvinylidenchlorid (PVDC), Vinylidenchlorid-Copolymere, vorzugsweise mit einem Anteil an Vinylidenchlorid von wenigstens 80%, bezogen auf das Gesamtgewicht des Vinylidenchlorid-Copolymeren, oder einer Mischung aus wenigstens zwei der genannten Polymere, besonders bevorzugt auf wenigstens einem Ethylen-Vinylalkohol-Copolymeren.

Die zur Herstellung der Schicht (c) eingesetzten Ethylen-Vinylalkohol-Copolymere (EVOH) werden durch vollständige oder unvollständige Hydrolyse von entsprechenden Ethylen-Vinylacetat-Copolymeren (EVAc) gewonnen. Vorzugsweise werden vollverseifte Ethylen-Vinylacetat-Copolymere mit einem Verseifungsgrad ≥ 98% und einem Ethylen-Anteil von 0,01-80 mol-%, vorzugsweise von 1-50 mol-%, jeweils bezogen auf das Gesamtgewicht des Ethylen-Vinylalkohol-Copolymeren, eingesetzt.

Die zur Herstellung der Schicht (c) der erfindungsgemäß zum Einsatz kommenden Mehrschichtfolie zumindest teilverseiften Polyvinylacetate werden durch vollständige oder unvollständige Hydrolyse von entsprechenden Polyvinylacetaten gewonnen. Besonders bevorzugt zur Herstellung der Schicht (c) eingesetzte zumindest teilverseifte Polyvinylacetate sind ausgewählt aus der Gruppe umfassend vollverseifte Polyvinylacetate (Polyvinylalkohole, PVOH) mit einem Verseifungsgrad > 98 % und teilverseifte Polyvinylacetate mit einem Verseifungsgrad von 75 bis einschließlich 98%.

Vorzugsweise weist die Schicht (c) der erfindungsgemäß zum Einsatz kommenden Mehrschichtfolie eine Schichtdicke von 1 µm bis 30 µm, besonders bevorzugt von 1 µm bis 20 µm, ganz besonders bevorzugt von 1 µm bis 10 µm, insbesondere von 1,5 bis 7 µm auf.

In einer bevorzugten Ausführungsform ist die Schicht (c) über eine transparente Haftvermittlerschicht (d) mit der jeweils an sie angrenzenden Schicht, vorzugsweise der Schicht (b), verbunden.

Zur Herstellung der Haftvermittlerschicht (d) der erfindungsgemäß zum Einsatz kommenden Mehrschichtfolie eignen sich thermoplastische Polymere, die mit polaren Gruppen, vorzugsweise mit organischen Säure-Gruppen und/oder organischen Säureanhydrid-Gruppen, besonders bevorzugt mit cyclischen organischen Säureanhydrid-Gruppen, ganz besonders bevorzugt mit Maleinsäureanhydrid-Gruppen modifiziert sind. Methoden zur Modifizierung der thermoplastischen Polymere, die sich zur Herstellung der Haftvermittlerschicht (d) eignen, sind dem Fachmann bekannt. Vorzugsweise ist die Modifizierung durch Pfropfung auf den thermoplastischen Polymeren erfolgt.

Vorzugsweise basiert die Haftvermittlerschicht (d) auf wenigstens einem modifizierten thermoplastischen Olefin-Homo- und/oder Copolymeren. Dabei kann die gleiche Art von thermoplastischen Olefin-Homo- und Copolymeren eingesetzt werden, die auch zur Herstellung der Siegelschicht (a) oder der Schicht (b) eingesetzt werden können. Besonders bevorzugt basiert die Haftvermittlerschicht (d) auf wenigstens einem mit einem cyclischen organischen Säureanhydrid-Gruppen modifizierten Ethylen- oder Propylen- Homo- oder Copolymeren, besonders bevorzugt auf einem mit Maleinsäureanhydrid-Gruppen modifizierten Ethylen- oder Propylen- Homo- oder Copolymeren.

Vorzugsweise weist die Haftvermittlerschicht (d) der erfindungsgemäß zum Einsatz kommenden Mehrschichtfolie eine Schichtdicke von höchstens 10 µm, besonders bevorzugt höchstens 5 µm, ganz besonders bevorzugt von höchstens 3 µm auf.

In einer bevorzugten Ausführungsform weist die erfindungsgemäß zum Einsatz kommende Mehrschichtfolie wenigstens eine transparente Schicht (h) basierend auf wenigstens einem Homo- und/oder Copolyamid auf, die vorzugsweise als Schutzschicht gegen Feuchtigkeit für die Schicht (c) dient und an diese vorzugsweise jeweils angrenzt.

Zur Herstellung der transparenten Schichten (h) der erfindungsgemäß zum Einsatz kommenden Mehrschichtfolie geeignete Homo- und/oder Copolyamide sind vorzugsweise ausgewählt aus der Gruppe umfassend thermoplastische aliphatische, teilaromatische und aromatische Homo- oder Copolyamide. Diese Homo- oder Copolymamide können aus aliphatischen und/oder cycloaliphatischen Diaminen mit 2-10 Kohlenstoffatomen wie Hexamethylendiamin und/oder aromatischen Diaminen mit 6-10 Kohlenstoffatomen wie p-Phenylendiamin, und aus aliphatischen und/oder aromatischen Dicarbonsäuren mit 6-14 Kohlenstoffatomen wie z.B. Adipinsäure, Terephthalsäure oder Isoterephthalsäure aufgebaut sein. Weiterhin können diese Homo- oder Copolyamide aus Lactamen mit 4-10 Kohlenstoffatomen wie z.B. aus ε-Caprolactam hergestellt werden. Erfindungsgemäß zum Einsatz kommende Homo- und/oder Copolyamide sind vorzugsweise ausgewählt aus der Gruppe umfassend PA 6, PA 12, PA 66, PA 6I, PA 6T, entsprechende Copolymere und Mischungen aus wenigstens zwei der genannten Polymere.

Vorzugsweise weist die Schicht (h) der erfindungsgemäß zum Einsatz kommenden Mehrschichtfolie jeweils eine Schichtdicke von höchstens 10 µm, besonders bevorzugt höchstens 5 µm, ganz besonders bevorzugt von höchstens 3 µm auf und ist vorzugsweise jeweils über eine Haftvermittlerschicht (d) mit der Schicht (b) bzw. (e) verbunden.

In einer bevorzugten Ausführungsform weist die erfindungsgemäß zum Einsatz kommende Mehrschichtfolie aus produktionstechnischen Gründen auch wenigstens eine transparente Schicht (e) basierend auf wenigstens einem thermoplastischen Olefin-Homo- oder Copolymeren auf.

Zur Herstellung der Schicht (e) der erfindungsgemäß zum Einsatz kommenden Mehrschichtfolie eignet sich dieselbe Art von thermoplastischen Olefin-Homo- und Copolymeren, welche auch zur Herstellung der Siegelschicht (a) oder der Schicht (b) eingesetzt werden können. Bevorzugt ist wenigstens ein thermoplastisches Olefin-Homopolymer, vorzugsweise wenigstens eine Ethylen-Homopolymer.

In einer bevorzugten Ausführungsform der erfindungsgemäß zum Einsatz kommenden Mehrschichtfolie ist die Schicht (e) über eine transparente Haftvermittlerschicht (d) bzw. (f) mit der jeweils angrenzenden Schicht, vorzugsweise der Schicht (c) bzw. (h) verbunden.

Vorzugsweise weist die Schicht (e) der erfindungsgemäß zum Einsatz kommenden Mehrschichtfolie eine Schichtdicke von 5 µm bis 50 µm, besonders bevorzugt von 7 µm bis 40 µm, ganz besonders bevorzugt von 10 µm bis 30 µm auf.

Zur Herstellung der Haftvermittlerschicht (f) der erfindungsgemäß zum Einsatz kommenden Mehrschichtfolie eignet sich dieselbe Art von modifizierten thermoplastischen Olefin-Homo- und Copolymeren, welche auch zur Herstellung der Haftvermittlerschicht (d) eingesetzt werden können.

Vorzugsweise weist die Haftvermittlerschicht (f) der erfindungsgemäß zum Einsatz kommenden Mehrschichtfolie eine Schichtdicke von höchstens 10 µm, besonders bevorzugt höchstens 5 µm, ganz besonders bevorzugt von höchstens 3 µm auf.

Weiterhin kann die erfindungsgemäß zum Einsatz kommende Mehrschichtfolie eine transparente, gegebenenfalls zumindest teilweise bedruckte Trägerschicht (g) aufweisen.

Zur Herstellung der Trägerschicht (g) der erfindungsgemäß zum Einsatz kommenden Mehrschichtfolie eignet sich vorzugsweise wenigstens ein thermoplastisches Polymer.

Vorzugsweise basiert die Trägerschicht (g) der erfindungsgemäß zum Einsatz kommenden Mehrschichtfolie auf wenigstens einem thermoplastischen Polymeren ausgewählt aus der Gruppe umfassend Olefin-Homo oder Copolymere, Homo- und Copolyamide und Homo- und Copolyester. Besonders bevorzugt basiert die Trägerschicht (g) auf wenigstens einem Homo- und/oder Copolyester.

Zur Herstellung der Trägerschicht (g) kann dieselbe Art von Olefin-Homo oder Copolymeren, Homo- und Copolyamiden und Homo- und Copolyestern eingesetzt werden, welche auch zur Herstellung der Schicht (b) bzw. der Siegelschicht (a) bzw. der Schicht(en) (h) eingesetzt werden können.

Die Trägerschicht (g) der erfindungsgemäß zum Einsatz kommende Mehrschichtfolie kann geprägt und/oder orientiert, vorzugsweise monoaxial oder biaxial orientiert, besonders bevorzugt biaxial orientiert sein.

Die Trägerschicht (g) der erfindungsgemäß zum Einsatz kommende Mehrschichtfolie weist vorzugsweise eine Schichtdicke von 10 µm bis 100 µm, besonders bevorzugt von 11 µm bis 80 µm, besonders bevorzugt von 12 µm bis 50 µm auf.

Vorzugsweise kann die Trägerschicht (g) mit dem übrigen Schichtverbund der erfindungsgemäß zum Einsatz kommenden Mehrschichtfolie, vorzugsweise mit einer Schicht (e) dieser Mehrschichtfolie, über eine Klebestoffschicht (i) basierend auf wenigstens einem Kaschierklebstoff, vorzugsweise einem Kaschierklebstoff basierend auf einem Polyurethan, besonders bevorzugt einem Zwei-Komponenten-Polyurethanklebstoff, verbunden sein.

Vorzugsweise weist die Klebstoffschicht (i) der erfindungsgemäß zum Einsatz kommenden Mehrschichtfolie eine Schichtdicke von höchstens 10 µm, besonders bevorzugt höchstens 5 µm, ganz besonders bevorzugt von höchstens 3 µm auf.

Die erfindungsgemäß zum Einsatz kommende Mehrschichtfolie weist vorzugsweise eine Gesamtschichtdicke von 20 µm bis 200 µm, besonders bevorzugt von 25 µm bis 150 µm, ganz besonders bevorzugt von 30 µm bis 120 µm, insbesondere von 35 µm bis 100 µm, insbesondere bevorzugt von 40 µm bis 80 µm auf.

Jede der Schichten der erfindungsgemäß zum Einsatz kommende Mehrschichtfolie, vorzugsweise die Siegelschicht (a), sowie gegebenenfalls die Siegelschicht (s) des efindungsgemäß zum Einsatz kommenden Behälters kann, falls erforderlich, jeweils unabhängig voneinander wenigstens ein dem Fachmann bekanntes übliches Additiv enthalten, vorzugsweise wenigstens ein Additiv ausgewählt aus der Gruppe umfassend Antiblockmittel, Gleitmittel, Farbstoffe, anorganische Füllstoffe, Antioxidantien, Weichmacher und Antistatika. Dabei kann jede der vorstehend genannten Schichten jeweils unabhängig voneinander wenigstens 0,01-20 Gew.-%, vorzugsweise wenigstens 0,1-10 Gew.-%, jeweils bezogen auf das Gesamtgewicht einer einzelnen Schicht, wenigstens eines der vorstehend genannten Additive enthalten.

Vorzugsweise können die Schichten (a) und (b) und ggf. (c) bis (h) der erfindungsgemäß zum Einsatz kommende Mehrschichtfolie teilweise oder insgesamt in Form einer Schlauchfolie oder einer Cast-Folie produziert und verarbeitet werden.

Demzufolge kann die Herstellung der einzelnen Schichten (a) und (b) und ggf. (c) bis (h) der erfindungsgemäß zum Einsatz kommende Mehrschichtfolie durch (Co)-Extrusion erfolgen.

Die der erfindungsgemäß zum Einsatz kommende Mehrschichtfolie aus den Schichten (a) und (b) und ggf. (c) bis (h) ist vorzugsweise durch (Co)-Extrusion, besonders bevorzugt durch Blasfolien-(Co)-Extrusion oder durch Cast-(Co)-Extrusion erhältlich.

Die Trägerschicht (g) der erfindungsgemäß zum Einsatz kommenden Mehrschichtfolie ist vorzugsweise durch Extrusion erhältlich und kann mit dem Schichtverbund der Mehrschichtfolie über eine Klebstoffstoffschicht (i) verbunden werden.

Nach der (Co)-Extrusion können einzelne Schichten oder Schichtverbünde oder die Mehrschichtfolie insgesamt gegebenenfalls gereckt, d.h. orientiert werden. Die Siegelschicht (a) kann nach der (Co)-Extrusion gegebenenfalls mit einem Antifog-Additiv ausgerüstet werden.

Die erfindungsgemäß zum Einsatz kommende Mehrschichtfolie kann gegebenenfalls thermoverformt werden, vorzugsweise durch Tiefziehen.

In einer besonders bevorzugten Ausführungsform besteht die erfindungsgemäße Verpackung aus einem Behälter basierend auf einem einschichtigen Film aus einem thermoplastischen Polymeren und einer erfindungsgemäß als Deckelfolie eingesetzten transparenten Mehrschichtfolie umfassend
eine Siegelschicht (a),
eine an die Siegelschicht (a) angrenzende Schicht (b),
ggf. eine Schicht (h),
eine Schicht (c) als Barriereschicht,
ggf. eine Schicht (h),
eine Trägerschicht (g)
und gegebenenfalls weitere Schichten, wie Haftvermittlerschichten (f).

Zur Herstellung der erfindungsgemäßen Verpackung wird die erfindungsgemäß zum Einsatz kommende Mehrschichtfolie entlang einer Siegelnaht über die Öffnung des erfindungsgemäß zum Einsatz kommenden Behälters, vorzugsweise auf den umlaufenden Rand dieses Behälters, gesiegelt.

Die jeweiligen Herstellungsverfahren und entsprechende übliche Verfahrensparameter sind dem Fachmann allgemein bekannt.

Die Siegelung der erfindungsgemäß zum Einsatz kommenden Mehrschichtfolie über die Öffnung des erfindungsgemäß zum Einsatz kommenden Behälters erfolgt vorzugsweise für höchstens 2 Sekunden, besonders bevorzugt für höchstens ≤ 1,5 Sekunden, vorzugsweise bei einer Temperatur im Bereich von 150 bis 200 °C, besonders bevorzugt im Bereich von 160 bis 190 °C, und vorzugsweise bei einem Druck von ≥ 1,5 bar bis ≤ 6 bar, besonders bevorzugt von ≥ 2 bar bis ≤ 5,5 bar.

Die erfindungsgemäßen Verpackungen zeichnen sich dadurch aus, dass sie kontrollierbar und zerstörungsfrei, d.h. ohne Zerstörung der Schicht (b) beim ersten Öffnen zu öffnen sind und dabei ein gleichmäßiges und in einem Zug ohne Erhöhung der Krafteinwirkung ausführbares Öffnen ermöglichen. Für das Öffnen der erfindungsgemäßen Verpackungen ist es nicht unbedingt notwendig, eine Öffnungshilfe an die Verpackung anzubringen. Wenn dennoch der Deckel eine Öffnungshilfe, vorzugsweise in Form einer Lasche, aufweist, so grenzt diese vorzugsweise an den Siegelnahtbereich der erfindungsgemäßen Verpackung an. Das erste Öffnen der erfindungsgemäßen Verpackung bis zum Siegelnahtbereich erfolgt vorzugsweise durch Ablösen des Deckels vom Behälter bis hin zum Siegelnahtbereich, oder, falls eine Öffnungshilfe vorhanden ist, unter Benutzung dieser Öffnungshilfe. Da die Verbundhaftung zwischen der Siegelschicht (a) und der Schicht (b) der Deckelfolie um wenigstens 30% geringer ist als die Siegelfestigkeit zwischen dem Behälter und dem Deckel, kommt es beim Öffnungsvorgang im Siegelnahtbereich zum Ausreißen eines Stückes der Siegelschicht (a) unter zerstörungsfreien Delaminieren von der Schicht (b) in Breite der Siegelnaht, wobei dieses Siegelschicht-Stück (a) im Siegelnahtbereich entsprechend der Siegelnahtbreite durch dieses weitgehend exakte Ausreißen und Delaminieren am Behälter verbleibt. Nach dem Öffnen im Bereich der Siegelnaht kann der Deckel vom Behälter dann problemlos entfernt werden.

Die erfindungsgemäßen Verpackungen, vorzugsweise die Deckelfolie der Verpackung, besonders bevorzugt die Trägerschicht (g) der erfindungsgemäß zum Einsatz kommenden Mehrschichtfolie können zumindest teilweise bedruckt und/oder eingefärbt transparent sein.

Die erfindungsgemäße Verpackung eignet sich vorzugsweise als Verpackung für Nahrungsmittel, vorzugsweise für Lebensmittel. Vorzugsweise liegt daher ein Lebensmittel als Verpackungsgut in der erfindungsgemäßen Verpackung verpackt vor und kann durch die erfindungsgemäß als Deckelfolie zum Einsatz kommende Mehrschichtfolie problemlos betrachtet werden.

Ein weiterer Gegenstand der vorliegenden Erfindung ist daher die Verwendung einer erfindungsgemäßen Verpackung als Lebensmittelverpackung.

Mit Hilfe der erfindungsgemäßen Verpackung ist es möglich, ein darin verpacktes Verpackungsgut, vorzugsweise ein Lebensmittel wie ein Fertiggericht in einem Mikrowellen-Ofen durch Einwirkung von Mikrowellen zu erwärmen. Dabei ist sichergestellt, dass die erfindungsgemäße Verpackung sich weder unkontrolliert. öffnet noch platzt, sondern sich beim Erwärmen selbst entgast. Sobald die durch den beim Erwärmen ansteigenden Dampfdruck innerhalb der Verpackung auf den Deckel ausgeübte Kraft größer ist als die Verbundhaftung zwischen der Siegelschicht (a) und der Schicht (b), kommt es an mindestens einer Stelle der Verpackung zu einer Delaminierung dieser Schichten im Siegelnahtbereich, wodurch ein Art Kanal entsteht, durch den der Dampf nach außen hin entweichen kann.

Vorzugsweise ist die erfindungsgemäße Verpackung daher eine selbstentgasende Verpackung bestimmt zum Erwärmen eines darin verpackten Lebensmittels durch Mikrowellen.

Sowohl der Behälter als auch der Deckel der erfindungsgemäßen Verpackung sind für die Benutzung in einem Mikrowellen-Ofen geeignet, d.h. sind für Mikrowellen durchlässig und werden durch den Einfluss der Mikrowellen weder deformiert noch abgebaut.

Ein weiterer Gegenstand der vorliegenden Erfindung ist die Verwendung der erfindungsgemäßen Verpackung zum Erwärmen eines darin verpackten Verpackungsguts, vorzugsweise eines Lebensmittels in einem Mikrowellen-Ofen.

### Bestimmung der Siegelfestigkeit

Die Siegelfestigkeit wird durch die Trennkraft in [N/15 mm] angegeben, die erforderlich ist, um den Behälter und den Deckel der erfindungsgemäßen Verpackung voneinander zu trennen.

Die Siegelfestigkeit zwischen dem Behälter und dem Deckel der erfindungsgemäßen Verpackung beruht auf der Siegelfestigkeit zwischen der Siegelschicht (a) der Mehrschichtfolie und Behälter, d.h. dem Film des Behälters. Es ist daher ausreichend, die Siegelfestigkeit zwischen einer Folie, welche wenigstens eine Siegelschicht (a) aufweist, und dem Behälter zu bestimmen. Die Methoden zur Bestimmung der Siegelfestigkeit können auch dazu angewendet werden, um die Auswahl der Polymermaterialien für den Aufbau der Siegelschicht (a) und des Films des Behälters auf ausreichende Siegelfestigkeit zu überprüfen.

Zur Bestimmung der Siegelfestigkeit werden ein Teststreifen einer ersten Folie umfassend jeweils eine Siegelschicht (a) und ein Teststreifen aus einer zweiten Folie, welche jeweils eine Breite von 15 mm und eine Länge von ca. 150 mm aufweisen, parallel übereinander gelegt, wobei der Teststreifen der ersten Folie mit seiner Siegelseite, d.h. der Siegelschicht (a) auf eine Seite der zweiten Folie gelegt wird. Mit einem Siegelgerät werden die beiden Streifen entlang der gesamten Breite von 15 mm miteinander versiegelt. Die beiden mit einer Siegelnaht versehenen Teststreifen werden an ihrem längeren, nicht versiegelten Enden in einer Zugprüfungsmaschine so befestigt, dass die voneinander zu trennenden Streifen einen Winkel von ca. 180 °C bilden und voneinander getrennt. Die anderen nicht versiegelten Enden werden dabei nicht in einem bestimmten Winkel fixiert. Die Messtrecke bzw. Messdauer ist so lange, bis die Siegelnaht von 15 mm aufgeht. Über der Messtrecke des Siegelbereichs wird die maximale und mittlere Kraft zur Trennung bestimmt. Als Meßgerät für die Prüfung wird eine rechnergesteuerte Zugprüfungsmaschine verwendet. Die in N gemessene Kraft entspricht der Kraft, die benötigt wird, die voneinander zu trennenden beiden Teststreifen entlang der Siegelnaht von 15 mm zu trennen.

### Bestimmung der Verbundhaftung

Die Verbundhaftung wird durch die Trennkraft in [N/15 mm] angegeben, die zum Trennen der Siegelschicht (a) von der Schicht (b) der erfindungsgemäß zum Einsatz kommenden Mehrschichtfolie erforderlich ist.

Zur Bestimmung der Verbundhaftung zwischen der Siegelschicht (a) und der Schicht (b) werden ein Teststreifen einer erfindungsgemäß eingesetzten Mehrschichtfolie und ein Teststreifen aus einer zweiten einschichtigen Folie aus einem thermoplastischen Polymeren, welche jeweils eine Breite von 15 mm und eine Länge von ca. 150 mm aufweisen, parallel übereinander gelegt, wobei der Teststreifen der erfindungsgemäß eingesetzten Mehrschichtfolie mit seiner Siegelseite, d.h. der Siegelschicht (a) auf eine der Seiten der zweiten Folien gelegt wird. Mit einem Siegelgerät werden die beiden Streifen entlang der gesamten Breite von 15 mm miteinander versiegelt. Der Teststreifen werden im Anschluss in einer Zugprüfungsmaschine so befestigt, dass die voneinander zu trennenden Schichten (Siegelschicht (a) und Schicht (b)) einen Winkel von ca. 180 °C bilden und werden anschließend voneinander getrennt. Über die Messtrecke wird die maximale und mittlere Kraft zur Trennung bestimmt. Als Meßgerät für die Prüfung wird eine rechnergesteuerte Zugprüfungsmaschine verwendet. Zur Ermittlung der Verbundhaftung wird dabei ein Kraft-Dehnungsdiagramm aufgezeichnet. Die in N gemessene Kraft entspricht der Kraft, die benötigt wird, um die voneinander zu trennenden Schichten (Siegelschicht (a) und Schicht (b)) des Teststreifens bis zur vollständigen Trennung zu trennen.

Die Methode wird auch angewendet, um die Auswahl der Polymermaterialien für den Aufbau der Schicht (b) bzw. der damit verbundenen Siegelschicht (a) auf ausreichende Delaminierbarkeit an der Grenzfläche voneinander, d.h. Peelbarkeit der Siegelschicht (a) von der an sie angrenzenden Schicht (b) zu überprüfen. Die Verbundhaftung zwischen diesen beiden Schichten kann damit auch vorherige Siegelung gegen eine(n) ein-oder mehrschichtigen Film oder Folie bestimmt werden.

### Bestimmung der Transparenz

Die Transparenz der erfindungsgemäß als Deckelfolie zum Einsatz kommenden Mehrschichtfolie wird über deren Trübung nach ASTM D 1003-61 bestimmt. Als Trübung wird die Lichtmenge bezeichnet, die eine Probe der erfindungsgemäß zum Einsatz kommenden Mehrschichtfolie nach Durchleuchten mit einem Zentralstrahl unter einem Raumwinkel von >8° bis maximal 160° verlässt. Die Trübung wird in [%] angegeben und auf die insgesamt durch die Probe durchtretene Lichtmenge (= 100%) bezogen.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

- Propylen-Copolymer:: Propylen-Copolymer enthaltend Ethylen und/oder Buten als weiteres Co-Monomer (Propylen-Anteil: wenigstens 90%) (Schmelzpunkt: 145°C, Dichte: 0,905 g/cm³)
- LDPE:: Ethylen-Homopolymer (Schmelzpunkt: 111 °C, Dichte: 0,924 g/cm³)
- PB: Butylen-Homopolymer (Schmelzpunkt: 117 °C, Dichte: 0,908 g/cm³)
- C8-mPE:: mittels Metallocen-Katalyse hergestelltes Ethylen-Copolymer, bei dessen Polymerisation neben Ethylen als weiteres Co-Monomer Octen eingesetzt worden ist (Ethylen-Anteil: wenigstens 85%) (Schmelzpunkt: 124°C, Dichte: 0,919 g/cm³)
- C6-mPE:: mittels Metallocen-Katalyse hergestelltes Ethylen-Copolymer, bei dessen Polymerisation neben Ethylen als weiteres Co-Monomer Hexen eingesetzt worden ist (Ethylen-Anteil: wenigstens 85%) (Schmelzpunkt: 118°C, Dichte: 0,918 g/cm³)
- EVOH-Copolymer:: Ethylen-Vinylalkohol-Copolymer (Ethylen-Anteil: 38%)
- HV1:: LLDPE (modifiziert mit Maleinsäureanhydrid)
- HV2:: Propylen-Copolymer (modifiziert mit Maleinsäureanhydrid)
- PA 6:: Polyamid 6
- BOPET:: Polyethylenterephthalat, biaxial orientiert
- PUR:: Klebstoff basierend auf Polyurethan
- APET:: amorphes Polyethylenterephthalat (Dichte: 1,27 g/cm³)
- CPET:: kristallines Polyethylenterephthalat
- EMA:: Ethylen-Methacrylsäure-Copolymer (Ethylen-Anteil: 76%) (Dichte: 0,94 g/cm³)
- EVA:: Ethylen-Vinylacetat-Copolymer (Ethylen-Anteil: 82%) (Dichte: 0,94 g/cm³)

### II. Herstellung der Verpackungen

### II.1 Herstellung der für die Behälter verwendeten Folien

Es wurden die für die Herstellung der Behälter eingesetzten Folien **F1-F3** jeweils durch Extrusion (**F1** und **F2**) oder durch Blasfolien-Co-Extrusion (**F3**) bereitgestellt. Die Folien **F1-F3** weisen jeweils den nachstehenden Schichtaufbau gemäß Tabelle 1 auf. Alle nachfolgenden %-Angaben sind jeweils Gew.-%.

**Tabelle 1**

| *Behälter* (**F1-F3**) | *Rohstoff **F1*** | *Rohstoff **F2*** | *Rohstoff **F3*** | *Schichtdicke* |
|---|---|---|---|---|
| Schicht | Propylen-Homopolymer (100%) | APET (100%) | CPET (100%) | 500 µm |
| Siegelschicht (s) | - | - | APET (100%) | 4 µm |

### II.2 Herstellung der mehrschichtigen Deckelfolien

Es wurden die als Deckel eingesetzten Mehrschichtfolien **D1-D7** wie folgt hergestellt.
a) Die Schichten (a), (b), (c), (d), (e), (f) und (h) der mehrschichtigen Deckelfolien **D1-D4** wurden zunächst jeweils als 8-schichtige Mehrschichtfolien durch Blasfolien-Co-Extrusion hergestellt. Die einzelnen vorstehend genannten Schichten der so erhaltenen Mehrschichtfolien grenzen dabei jeweils in der Reihenfolge unmittelbar aneinander an, in der sie nachstehend aufgeführt sind. Die Schicht (e) des 8-schichtigen Folienverbundes wurde anschließend jeweils mit einer Trägerschicht (g) mittels eines auf Polyurethan-basierenden Klebstoffs (Schicht (i)) kaschiert, so dass jeweils eine einschließlich der resultierenden Klebstoffschicht (i)) 10-schichtige Mehrschichtfolie als Deckelfolie **D1-D4** erhalten wurden. Die Mehrschichtfolien **D1-D4** weisen jeweils den Schichtaufbau gemäß nachstehender Tabelle 2 und eine Gesamtschichtdicke von jeweils 54 µm auf. Alle %-Angaben in Tabelle 2 sind jeweils Gew.-%.

**Tabelle 2**

| *Schichtaufbau (jeweils von **D1, D2, D3** und **D4***)* | *Rohstoffe **D1*** | *Rohstoffe **D2*** | *Rohstoffe **D3*** | *Rohstoffe **D4**** | *Schichtdicke* |
|---|---|---|---|---|---|
| Siegelschicht (a) | Propylen-Copolymer (100%) | Propylen-Copolymer (100%) | Propylen-Copolymer (100%) | Propylen-Copolymer (100%) | 4 µm |
| Schicht (b) | C8-mPE (70%), LDPE (30%) | C8-mPE (55%), LDPE (45%) | C6-mPE (100%) | LDPE (90%), PB (10%) | 8 µm |
| Haftvermittlerschicht (d) | HV1 (100%) | HV1 (100%) | HV1 (100%) | HV1 (100%) | 3 µm |
| Schicht (h) | PA 6 (100%) | PA 6 (100%) | PA 6 (100%) | PA 6 (100%) | 3 µm |
| Barriereschicht (c) | EVOH-Copolymer (100%) | EVOH-Copolymer (100%) | EVOH-Copolymer (100%) | EVOH-Copolymer (100%) | 3 µm |
| Schicht (h) | PA 6 (100%) | PA 6 (100%) | PA 6 (100%) | PA 6 (100%) | 3 µm |
| Haftvermittlerschicht (f) | HV2 (100%) | HV2 (100%) | HV2 (100%) | HV2 (100%) | 3 µm |
| Schicht (e) | Propylen-Copolymer (100%) | Propylen-Copolymer (100%) | Propylen-Copolymer (100%) | Propylen-Copolymer (100%) | 13 µm |
| Klebstoffschicht (i) | PUR (100%) | PUR (100%) | PUR (100%) | PUR (100%) | 2 µm |
| Trägerschicht (g) | BOPET (100%) | BOPET (100%) | BOPET (100%) | BOPET (100%) | 12 µm |

| | | | | | |
|---|---|---|---|---|---|
| ***D4** ist eine Mehrschichtfolie, die zum Herstellung einer nicht erfindungsgemäßen Verpackung eingesetzt wird. | | | | | |

b) Die Schichten (a), (b), (c), (d), (e), und (f) der mehrschichtigen Deckelfolien **D5** bzw. **D7** wurden zunächst jeweils als 7-schichtige Mehrschichtfolien durch Blasfolien-Co-Extrusion hergestellt. Die einzelnen vorstehend genannten Schichten der so erhaltenen Mehrschichtfolien grenzen dabei jeweils in der Reihenfolge unmittelbar aneinander an, in der sie nachstehend aufgeführt sind. Die Schicht (e) der so durch Co-Extrusion erhaltenen 7-schichtigen Mehrschichtfolie wurde anschließend jeweils mit einer Trägerschicht (g) mittels eines auf Polyurethan-basierenden Klebstoffs (Schicht (i)) kaschiert, so dass jeweils eine einschließlich der resultierenden Klebstoffschicht (i)) insgesamt 9-schichtige Mehrschichtfolien als Deckelfolie **D5** bzw. **D7** erhalten wurden. Die Mehrschichtfolien **D5** und **D7** weisen eine Gesamtschichtdicke von jeweils 62 µm auf. Durch einseitige Beschichtung der Siegelschicht (a) der Mehrschichtfolie **D5** mit einem Antifog-Additiv wurde die Mehrschichtfolie **D6** erhalten. Die als Deckel zum Einsatz kommenden Mehrschichtfolien **D5** bzw. **D7** weisen jeweils den Schichtaufbau gemäß nachstehender Tabelle 3 auf. Alle %-Angaben in Tabelle 3 sind jeweils Gew.-%.

**Tabelle 3**

| *Schichtaufbau (jeweils von **D5** und **D7**)* | *Rohstoffe **D5*** | *Rohstoffe **D7*** | *Schichtdicke* |
|---|---|---|---|
| Siegelschicht (a) | APET (100%) | APET (100%) | 4 µm |
| Schicht (b) | EMA (100%) | EVA (100%) | 10 µm |
| Haftvermittlerschicht (d) | HV1 (100%) | HV1 (100%) | 2 µm |
| Barriereschicht (c) | EVOH-Copolymer (100%) | EVOH-Copolymer (100%) | 2 µm |
| Haftvermittlerschicht (f) | HV1 (100%) | HV1 (100%) | 2 µm |
| Schicht (e) | LDPE (100%) | LDPE (100%) | 16 µm |
| Schicht (e) | LDPE (100%) | LDPE (100%) | 12 µm |
| Klebstoffschicht (i) | PUR (100%) | PUR (100%) | 2 µm |
| Trägerschicht (g) | BOPET (100%) | BOPET (100%) | 12 µm |

| | | | |
|---|---|---|---|
| **D6** weist einen zu **D5** identischen Schichtaufbau auf, wobei die Siegelschicht (a) jedoch einseitig mit einem Antifog-Additv beschichtet ist. | | | |

### II.3 Herstellung der Verpackungen

Die Herstellung einer erfindungsgemäßen Verpackung aus einem Deckel und einem Behälter erfolgte entweder durch Heißsiegelung jeweils einer Deckelfolie **D1-D3** mit ihrer Siegelschicht (a) gegen einen Behälter aus einer Folie **F1**, wobei die erfindungsgemäßen Verpackungen **B1-B3** erhalten wurden, oder die Herstellung einer erfindungsgemäßen Verpackung erfolgte durch Heißsiegelung jeweils einer Deckelfolie **D5-D7** mit ihrer Siegelschicht (a) gegen einen Behälter aus einer der Folien **F2** oder **F3** (wobei bei dem Behälter **F3** die Siegelung gegen die Siegelschicht (s) des Behälters erfolgt), wobei die erfindungsgemäßen Verpackungen **B5-B7** erhalten wurden.

Die Herstellung einer nicht erfindungsgemäßen Verpackung aus einem Deckel und einem Behälter erfolgte durch Heißsiegelung einer Deckelfolie **D4** mit ihrer Siegelschicht (a) gegen einen Behälter aus einer Folie **F1**, wobei die nicht erfindungsgemäße Verpackung **V1** erhalten wurde.

Die Versiegelung wurde jeweils mit einem Siegelgerät (Model Typ Sentinel Brand Machine Model 24ASG) durchgeführt.

Bei den Verpackungen **B1** bis **B3** sowie **V1** erfolgte die Versiegelung bei 5 bar und bei einer Temperatur von 180°C für eine halbe Sekunde lang. Die Siegelbacken waren dabei glatt, 25 mm breit und beidseitig beheizt.

Bei den Verpackungen **B4** bis **B7** erfolgte die Versiegelung bei 2,5 bar und bei einer Temperatur von 170°C für eine Sekunde lang. Die Siegelbacken waren dabei glatt, 25 mm breit und nur einseitig beheizt und einseitig mit Teflon beschichtet.

### III. Bestimmung der Siegelfestigkeit

Die Siegelfestigkeit zwischen der Siegelschicht (a) der erfindungsgemäß als Deckel eingesetzten Mehrschichtfolien und einem der Behälter aus einer der Folien **F1** oder **F2** wurde wie folgt in einem Vorversuch bestimmt.

Dabei wurden zunächst zwei Deckelfolien **D1a** und **D5a** hergestellt, die einen der Deckelfolie **D1** bzw. **D5** entsprechenden Schichtaufbau aufweisen (s. vorstehende Tabellen 2 bzw. 3), mit der Ausnahme, dass sie jeweils keine Schicht (b) aufweisen. **D1a** wurde gegen einen Behälter aus einer Folie **F1** gesiegelt, wobei die dabei zur Anwendung kommenden Siegelparameter den Parametern entsprechen, die bei der Herstellung der Verpackungen **B1-B3** bzw. **V1** verwendet worden sind (s. **II.3**). **D5a** wurde gegen einen Behälter aus einer Folie **F2** gesiegelt, wobei die dabei zur Anwendung kommenden Siegelparameter den Parametern entsprechen, die bei der Herstellung der Verpackungen **B4-B7** verwendet worden sind (s. **II.3)**.

Die Siegelfestigkeit zwischen der Siegelschicht (a) der Deckel **D1a** bzw. **D5a** und dem Behälter aus der Folie **F1** bzw. **F2** wurde nach der vorstehend beschriebenen Methode bestimmt. Die Teststreifen wurden dabei in einer Zugprüfungsmaschine (Zugprüfungsmaschine Zwick Z 2,5 (Kraftmesskopf 100 N)) befestigt und voneinander mit einer Geschwindigkeit von 200 mm/min (im Fall einer Verpackung aus **D1a** und **F1**) bzw. 100 ml/min (im Fall einer Verpackung aus **D5a** und **F2**) getrennt.

**Tabelle 4**

| *Deckelfolie* | *gesiegelt gegen Folie* | *Siegelfestigkeit [N*/*15 mm]* |
|---|---|---|
| **D1a** | **F1** | 28,3 |
| **D5a** | **F2** | 23,1 |

### IV. Bestimmung der Verbundhaftung

Zur Bestimmung der Verbundhaftung zwischen der Siegelschicht (a) und der Schicht (b) wurde jeweils eine der Deckelfolien **D1-D7** mit ihrer Siegelschicht (a) wie unter Punkt **II.3** beschrieben gegen einen Behälter aus einer Folie **F1**, **F2** oder **F3** gesiegelt.

Die Verbundhaftung zwischen der Siegelschicht (a) und der Schicht (b) der Verpackungen **B1-B7** sowie **V1** wurde nach der vorstehend beschriebenen Methode bestimmt. Die Teststreifen wurden dabei in einer Zugprüfungsmaschine (Zugprüfungsmaschine Zwick Z 2,5 (Kraftmesskopf 100 N)) befestigt und voneinander mit einer Geschwindigkeit von 200 mm/min (im Fall der Verpackungen **B1** bis **B3** sowie **V1**) bzw. 100 ml/min (im Fall der Verpackungen **B4** bis **B7**) getrennt.

Die ermittelten Werte sind in nachstehender Tabelle 5 angegeben.

**Tabelle 5**

| *Verpackung* | *Deckelfolie* | *gesiegelt gegen Behälter aus* | *Verbundhaftung [N*/*15 mm]* |
|---|---|---|---|
| **B1** | **D1** | **F1** | 10,0 |
| **B2** | **D2** | **F1** | 6,0 |
| **B3** | **D3** | **F1** | 6,0 |
| **V1** | **D4** | **F1** | 7,0 |
| **B4** | **D5** | **F2** | 9,5 |
| **B5** | **D5** | **F3** | 8,9 |
| **B6** | **D7** | **F2** | 16,1 |
| **B7** | **D7** | **F3** | 15,4 |

### V. Bestimmung des Öffnungsverhaltens der Verpackungen

Das Öffnungsverhalten der erfindungsgemäßen Verpackungen **B1-B7** sowie der nicht erfindungsgemäßen Verpackung **V1** wurde in jeweils fünf Versuchsreihen für jede der Verpackungen beurteilt. Die Ergebnisse sind in nachstehender Tabelle 6 angegeben.

**Tabelle 6**

| *Verpackung* | *Deckelfolie* | *gesiegelt gegen Behälter* aus | *Öffnungsverhalten* |
|---|---|---|---|
| **B1** | **D1** | **F1** | (+) |
| **B2** | **D2** | **F1** | (+) |
| **B3** | **D3** | **F1** | (+) |
| **V1** | **D4** | **F1** | (-) |
| **B4** | **D5** | **F2** | (+) |
| **B5** | **D5** | **F3** | (+) |
| **B6** | **D7** | **F2** | (+) |
| **B7** | **D7** | **F3** | (+) |

| | | | |
|---|---|---|---|
| (+) = im Siegelnahtbereich zwischen Siegelschicht (a) und Schicht (b) delaminierbar unter weitgehend exaktem Ausreißen der Siegelschicht (a) aus dem Deckel (-) = im Siegelnahtbereich nicht delaminierbar zwischen Siegelschicht (a) und Schicht (b), sondern ein Einreißen der Schicht (b) hat einen Einriß des Deckels außerhalb des Siegelnahtbereichs zur Folge | | | |

Die Siegelschicht (a) und die Schicht (b) des Deckels der nicht erfindungsgemäßen Verpackung **V1** sind damit im Siegelnahtbereich der Verpackung nicht peelbar miteinander verbunden.

### VI. Bestimmung der Transparenz

Für die Deckelfolien **D1-D6** wurde nach der vorstehend beschriebenen Methode die Transparenz bestimmt. Die ermittelten Messwerte sind in Tabelle 7 angegeben.

**Tabelle 7**

| *Deckelfolie* | *Trübung [%]* |
|---|---|
| **D1** | 5,5 |
| **D2** | 4,9 |
| **D3** | 6,1 |
| **D4** | 11,0 |
| **D5** | 4,5 |
| **D6** | 4,0 |

Die zur Herstellung der Verpackung **V1** als Deckel zum Einsatz kommende Deckelfolie **D4** weist eine um wenigstens 40% höhere Trübung als die Deckelfolien **D1-D3**, **D5** bzw. **D6** auf, die als Deckel zur Herstellung der erfindungsgemäßen Verpackungen **B1** bis **B7** zum Einsatz kommen.

## Patentansprüche

1. Eine ein gut kontrollierbares Öffnungsverhalten aufweisende Verpackung aus einem Behälter basierend auf einem einschichtigen Film aus einem wenigstens thermoplastischen Polymeren, der gegebenenfalls eine Siegelschicht (s) basierend auf einem heißsiegelfähigen, thermoplastischen Polymeren aufweist, wobei die Öffnung des Behälters mit einem Deckel aus einer transparenten Mehrschichtfolie versiegelt ist, die
eine Siegelschicht (a) basierend auf wenigstens einem heißsiegelfähigen, thermoplastischen Olefin- Homo- und/oder Copolymeren mit einer Schichtdicke von höchstens 12 µm, eine an die Siegelschicht (a) angrenzende Schicht (b) aus wenigstens einem thermoplastischen Copolymeren aus Ethylen und/oder Propylen und wenigstens einem α-Olefin mit mindestens 4 Kohlenstoffatomen, wobei die Schicht (b) auf einem von den thermoplastischen Polymeren der Siegelschicht (a) verschiedenen, thermoplastischen Polymeren basiert,
und gegebenenfalls weitere Schichten umfasst, wobei die gegebenenfalls vorhandene Siegelschicht (s) auf dem - oder denselben Polymeren wie die Siegelschicht (a) beruht und der einschichtige Film des Behälters aus denselben thermoplastischen Olefin- Homo- und/oder Copolymeren hergestellt ist, aus denen die Siegelschicht (a) hergestellt ist, oder alternativ
die Öffnung des Behälters mit einem Deckel aus einer transparenten Mehrschichtfolie versiegelt ist, die
eine Siegelschicht (a) basierend auf wenigstens einem heißsiegelfähigen, thermoplastischen, amorphen Homo- oder Copolyester mit einer Schichtdicke von höchstens 12 µm, eine an die Siegelschicht (a) angrenzende Schicht (b) aus wenigstens einem Ethylen-Copolymeren ausgewählt aus der Gruppe umfassend Ethylen-Vinylacetat-Copolymere, Ethylen-C₁₋₄-Alkyl(meth)acrylatCopolymere und Ethylen- (Meth)acrylsäure-Copolymere, wobei die Schicht (b) auf einem von den thermoplastischen Polymeren der Siegelschicht (a) verschiedenen, thermoplastischen Polymeren basiert,
und gegebenenfalls weitere Schichten umfasst,
wobei die gegebenenfalls vorhandene Siegelschicht (s) auf dem - oder denselben Polymeren wie die Siegelschicht (a) beruht und der einschichtige Film des Behälters aus einem thermoplastischen Homo- und/oder Copolyester hergestellt ist,
wobei die Verbundhaftung zwischen der Siegelschicht (a) und der Schicht (b) jeweils um wenigstens 30% geringer ist als die Siegelfestigkeit zwischen dem Behälter und dem Deckel, so dass die Mehrschichtfolie zwischen der Siegelschicht (a) und der Schicht (b) so peelbar verbunden ist, dass beim ersten Öffnen der Verpackung im Siegelnahtbereich nur ein Stück der Siegelschicht (a) in der Breite der Siegelnaht auf dem Behälter verbleibt und keine weitere Delaminierung zwischen den Schichten (a) und (b) erfolgt.

2. Eine Verpackung nach Anspruch 1, **dadurch gekennzeichnet, dass** die Verbundhaftung zwischen der Siegelschicht (a) und der Schicht (b) um wenigstens 50% geringer ist als die Siegelfestigkeit zwischen dem Behälter und dem Deckel.

3. Eine Verpackung nach Anspruch 1 oder 2, **dadurch gekennzeichnet, dass** die Verbundhaftung zwischen der Siegelschicht (a) und der Schicht (b) mindestens 2,5 N/15 mm beträgt.

4. Eine Verpackung nach einem der Ansprüche 1 bis 3, **dadurch gekennzeichnet, dass** die Schicht (b) auf wenigstens einem Copolymeren aus Ethylen und/oder Propylen und Buten, Hexen und/oder Octen basiert.

5. Eine Verpackung nach einem der Ansprüche 1 bis 4, **dadurch gekennzeichnet, dass** die Siegelschicht (a) der Mehrschichtfolie auf wenigstens einem amorphen Homopolyester aus einer aromatischen Dicarbonsäure und einem aliphatischen Polyol oder auf wenigstens einem amorphen Copolyester aus wenigstens einer aromatischen Dicarbonsäure und wenigstens einem aliphatischen und wenigstens einem cycloaliphatischen Polyol, oder auf wenigstens einem Propylen-Homo und/oder Copolymeren, vorzugsweise auf wenigstens einem Propylen-Copolymeren, basiert.

6. Eine Verpackung nach einem der Ansprüche 1 bis 5, **dadurch gekennzeichnet, dass** die Siegelschicht (a) eine Schichtdicke von 2 bis 10 µm, vorzugsweise 3 bis 8 µm, aufweist

7. Eine Verpackung nach einem der Ansprüche 1 bis 6, **dadurch gekennzeichnet, dass** die Siegelschicht (a) eine Antifog-Ausrüstung aufweist.

8. Eine Verpackung nach einem der Ansprüche 1 bis 7, **dadurch gekennzeichnet, dass** die Mehrschichtfolie eine Schicht (c) als Barriereschicht, vorzugsweise als eine Gasbarriereschicht, aufweist, welche ggf. jeweils mit einer Schicht (h) aus Polyamid oder ggf. über eine Haftvermittlerschicht (d) jeweils mit der angrenzenden Schicht verbunden ist.

9. Eine Verpackung nach Anspruch 8, **dadurch gekennzeichnet, dass** die Barriereschicht (c) auf wenigstens einem thermoplastischen Polymer ausgewählt aus der Gruppe umfassend Ethylen-Vinylalkohol-Copolymere, zumindest teilverseifte Polyvinylacetate, Polyvinylidenchlorid, Vinylidenchlorid-Copolymere oder einer Mischung aus wenigstens zwei der genannten Polymere, vorzugsweise auf wenigstens einem Ethylen-Vinylalkohol-Copolymeren basiert.

10. Eine Verpackung nach einem der Ansprüche 1 bis 9, **dadurch gekennzeichnet, dass** die Mehrschichtfolie eine gegebenfalls mono- oder biaxial orientierte Trägerschicht (g) aufweist.

11. Eine Verpackung nach einem der Ansprüche 1 bis 10, **dadurch gekennzeichnet, dass** die Verpackung eine Lebensmittelverpackung ist.

12. Eine Verpackung nach einem der Ansprüche 1 bis 11 **dadurch gekennzeichnet**, die Verpackung ein Verpackungsgut, vorzugsweise ein Lebensmittel, enthält.

13. Eine Verpackung nach einem der Ansprüche 1 bis 12, **dadurch gekennzeichnet, dass** der Deckel der Verpackung eine an die Siegelnaht angrenzend eine Öffnungshilfe, vorzugsweise eine Lasche, aufweist.

14. Eine Verpackung nach einem der Ansprüche 1 bis 13, **dadurch gekennzeichnet, dass** sie eine selbstentgasende, zum Erwärmen eines darin verpackten Lebensmittels durch Mikrowellen bestimmte Verpackung ist.

## Claims

1. A packaging with an easily controllable opening behaviour, comprising a container based on a mono-layer film made of an at least thermoplastic polymer, which film optionally comprises a sealable layer (s) based on a heat-sealable thermoplastic polymer, the opening of said container is sealed by a cover made of a transparent multilayer film comprising a sealable layer (a) based on at least one heat-sealable thermoplastic olefin homo- and/or copolymer with a layer thickness of at most 12 µm and, adjoining the sealable layer (a), a layer (b) made of at least one thermoplastic copolymer of ethylene and/or propylene and of at least one α-olefin having at least four carbon atoms, said layer (b) is based on a thermoplastic polymer different from the thermoplastic polymers of the sealable layer (a),
and optionally other layers, where the optionally present sealable layer (s) is based on the same polymer(s) as the sealable layer (a) and the thermoplastic olefin homo- and/or copolymers from which the mono-layer film of the container is produced are the same as those from which the sealable layer (a) has been produced,
or alternatively
the opening of the container is sealed by a cover made of a transparent multilayer film which comprises
a sealable layer (a) based on at least one heat-sealable thermoplastic amorphous homo- or copolyester with a layer thickness of at most 12 µm and, adjoining the sealable layer (a), a layer (b) made of at least one ethylene copolymer selected from the group comprising ethylene-vinyl acetate copolymers, ethylene-C₁₋₄-alkyl (meth)acrylate copolymers and ethylene-(meth)acrylic acid copolymers, where said layer (b) is based on a thermoplastic polymer different from the thermoplastic polymers of the sealable layer (a),
and optionally other layers,
whereby the optionally present sealable layer (s) is based on the same polymer (s) as the sealable layer (a) and the mono-layer film of the container is produced from a thermoplastic homo- and/or copolyester,
whereby the adhesion between the sealable layer (a) and the layer (b) is in each case by at least 30% lower than the sealing strength between the container and the cover, causing the bond between the sealable layer (a) and the layer (b) in the multilayer film to be enough peelable that during the first opening of the packaging in the seal seam region only a section of the sealable layer (a) in the width of the seal seam remains on the container, and no further delamination takes place between the layers (a) and (b).

2. A packaging according to Claim 1, **characterized in that** the adhesion between the sealable layer (a) and the layer (b) is by at least 50% lower than the sealing strength between the container and the cover.

3. A packaging according to Claim 1 or 2, **characterized in that** the adhesion between the sealable layer (a) and the layer (b) is at least 2.5 N/15 mm.

4. A packaging according to anyone of Claims 1 to 3, **characterized in that** the layer (b) is based on at least one copolymer of ethylene and/or propylene and butene, hexene and/or octene.

5. A packaging according to anyone of Claims 1 to 4, **characterized in that** the sealable layer (a) of the multilayer film is based on at least one amorphous homopolyester of an aromatic dicarboxylic acid and an aliphatic polyol or on at least one amorphous copolyester of at least one aromatic dicarboxylic acid and at least one aliphatic and at least one cycloaliphatic polyol, or on at least one propylene homo- and/or copolymer, preferably on at least one propylene copolymer.

6. A packaging according to anyone of Claims 1 to 5, **characterized in that** the sealable layer (a) has a layer thickness of from 2 to 10 µm, preferably from 3 to 8 µm.

7. A packaging according to anyone of Claims 1 to 6, **characterized in that** the sealable layer (a) has antifogging properties.

8. A packaging according to anyone of Claims 1 to 7, **characterized in that** the multilayer film comprises a layer (c) as barrier layer, preferably as a gas-barrier layer, which is optionally in each case bonded to a layer (h) of polyamide or is optionally bonded in each case by way of an adhesion-promoter layer (d) to the adjacent layer.

9. A packaging according to Claim 8, **characterized in that** the barrier layer (c) is based on at least one thermoplastic polymer selected from the group comprising ethylene-vinyl alcohol copolymers, at least partially hydrolyzed polyvinyl acetates, polyvinylidene chloride, vinlyidene chloride copolymers or a mixture of at least two of the polymers mentioned, preferably on at least one ethylene-vinyl alcohol copolymer.

10. A packaging according to anyone of Claims 1 to 9, **characterized in that** the multilayer film has an optionally mono- or biaxially orientated substrate layer (g).

11. A packaging according to anyone of Claims 1 to 10, **characterized in that** the packaging is packaging for food.

12. A packaging according to anyone of Claims 1 to 11, **characterized in that** the packaging comprises a packaged product, preferably food.

13. A packaging according to anyone of Claims 1 to 12, **characterized in that** the cover of the packaging has, adjoining the seal seam, an opening aid, preferably a flap.

14. A packaging according to anyone of Claims 1 to 13, **characterized in that** it is self-degassing packaging suitable for heating the packaged food by microwaves.

## Revendications

1. Emballage présentant un comportement d'ouverture bien contrôlable en un contenant à base d'un film monocouche en un polymère au moins thermoplastique, qui comprend éventuellement une couche de scellage (s) à base d'un polymère thermoplastique thermoscellable, l'ouverture du contenant étant scellée avec un couvercle en une feuille multicouche transparente, qui comprend
une couche de scellage (a) à base d'au moins un homo- et/ou copolymère d'oléfine thermoplastique thermoscellable ayant une épaisseur de couche d'au plus 12 µm, une couche (b) adjacente à la couche de scellage (a), en au moins un copolymère thermoplastique d'éthylène et/ou de propylène et d'au moins une α-oléfine contenant au moins 4 atomes de carbone, la couche (b) étant à base d'un polymère thermoplastique différent des polymères thermoplastiques de la couche de scellage (a),
et éventuellement d'autres couches, la couche de scellage (s) éventuellement présentes étant à base du ou des mêmes polymères que la couche de scellage (a), et le film monocouche du contenant étant fabriqué en le même homo- et/ou copolymère d'oléfine thermoplastique que celui en lequel la couche de scellage (a) est fabriquée,
ou, en variante,
l'ouverture du contenant étant scellée avec un couvercle en une feuille multicouche transparente, qui comprend
une couche de scellage (a) à base d'au moins un homo- ou copolyester amorphe thermoplastique thermoscellable, ayant une épaisseur de couche d'au plus 12 µm, une couche (b) adjacente à la couche de scellage (a), en au moins un copolymère d'éthylène choisi dans le groupe comprenant les copolymères d'éthylène-acétate de vinyle, les copolymères d'éthylène-(méth)acrylate d'alkyle en C₁₋₄, et les copolymères d'éthylène-acide (méth)acrylique, la couche (b) étant à base d'un polymère thermoplastique différent des polymères thermoplastiques de la couche de scellage (a),
et éventuellement d'autres couches,
la couche de scellage (s) éventuellement présente étant à base du ou des mêmes polymères que la couche de scellage (a) et le film monocouche du contenant étant fabriqué en un homo- et/ou copolyester thermoplastique, la cohérence entre la couche de scellage (a) et la couche (b) étant à chaque fois au moins 30 % plus faible que la résistance de scellage entre le contenant et le couvercle, de sorte que la feuille multicouche entre la couche de scellage (a) et la couche (b) soit reliée de manière à pouvoir être pelée de sorte que lors d'une première ouverture de l'emballage dans la zone du joint scellé, seule une partie de la couche de scellage (a) reste dans la largeur du joint scellé sur le contenant et qu'aucun délaminage supplémentaire entre les couches (a) et (b) n'ait lieu.

2. Emballage selon la revendication 1, **caractérisé en ce que** la cohérence entre la couche de scellage (a) et la couche (b) est au moins 50 % plus faible que la résistance de scellage entre le contenant et le couvercle.

3. Emballage selon la revendication 1 ou 2, **caractérisé en ce que** la cohérence entre la couche de scellage (a) et la couche (b) est d'au moins 2,5 N/15 mm.

4. Emballage selon l'une quelconque des revendications 1 à 3, **caractérisé en ce que** la couche (b) est à base d'au moins un copolymère d'éthylène et/ou de propylène et de butène, d'hexène et/ou d'octène.

5. Emballage selon l'une quelconque des revendications 1 à 4, **caractérisé en ce que** la couche de scellage (a) de la feuille multicouche est à base d'au moins un homopolyester amorphe d'un acide dicarboxylique aromatique et d'un polyol aliphatique ou d'au moins un copolyester amorphe d'au moins un acide dicarboxylique aromatique et d'au moins un polyol aliphatique et d'au moins un polyol cycloaliphatique, ou d'au moins un homo- et/ou copolymère de propylène, de préférence d'au moins un copolymère de propylène.

6. Emballage selon l'une quelconque des revendications 1 à 5, **caractérisé en ce que** la couche de scellage (a) présente une épaisseur de couche de 2 à 10 µm, de préférence de 3 à 8 µm.

7. Emballage selon l'une quelconque des revendications 1 à 6, **caractérisé en ce que** la couche de scellage (a) comprend un apprêt antibuée.

8. Emballage selon l'une quelconque des revendications 1 à 7, **caractérisé en ce que** la feuille multicouche comprend une couche (c) en tant que couche de barrière, de préférence en tant que couche de barrière aux gaz, qui est reliée avec la couche adjacente éventuellement avec une couche (h) en polyamide ou éventuellement par le biais d'une couche de promoteur d'adhésion (d).

9. Emballage selon la revendication 8, **caractérisé en ce que** la couche de barrière (c) est à base d'au moins un polymère thermoplastique choisi dans le groupe comprenant les copolymères d'éthylène-alcool vinylique, les polyacétates de vinyle au moins partiellement saponifiés, le polychlorure de vinylidène, les copolymères de chlorure de vinylidène ou un mélange d'au moins deux des polymères mentionnés, de préférence d'au moins un copolymère d'éthylène-alcool vinylique.

10. Emballage selon l'une quelconque des revendications 1 à 9, **caractérisé en ce que** la feuille multicouche comprend une couche support (g) éventuellement à orientation mono- ou biaxiale.

11. Emballage selon l'une quelconque des revendications 1 à 10, **caractérisé en ce que** l'emballage est un emballage alimentaire.

12. Emballage selon l'une quelconque des revendications 1 à 11, **caractérisé en ce que** l'emballage contient un produit emballé, de préférence un produit alimentaire.

13. Emballage selon l'une quelconque des revendications 1 à 12, **caractérisé en ce que** le couvercle de l'emballage comprend un auxiliaire d'ouverture adjacent au joint scellé, de préférence un rabat.

14. Emballage selon l'une quelconque des revendications 1 à 13, **caractérisé en ce qu'**il s'agit d'un emballage auto-dégazant, destiné au chauffage d'un produit alimentaire emballé dans celui-ci par micro-ondes.
